# EUROPÄISCHE PATENTSCHRIFT

(11) **EP 1 642 044 B1**
(45) Veröffentlichungstag und Bekanntmachung des Hinweises auf die Patenterteilung: **03.09.2008**
(21) Anmeldenummer: 04739656.9
(22) Anmeldetag: 07.06.2004
(51) Int. Cl.: F16H 3/08

(54) **LASTSCHALTGETRIEBE FÜR BAUMASCHINEN, INSBESONDERE FÜR BAGGERLADER UND TELEHANDLER**
POWERSHIFT GEARBOX FOR CONSTRUCTION MACHINES, ESPECIALLY FOR A TRACTOR BACKHOE LOADER AND A TELESCOPIC HANDLER
BOITE DE VITESSES COUPLABLE SOUS CHARGE POUR ENGINS DE CHANTIER, EN PARTICULIER POUR CHARGEUSES-PELLETEUSES ET MANIPULATEURS TELESCOPIQUES

(30) Priorität: 04.07.2003 DE 10330159
(43) Veröffentlichungstag der Anmeldung: 05.04.2006
(73) Patentinhaber: ZF FRIEDRICHSHAFEN Aktiengesellschaft, 88038 Friedrichshafen (DE)
(72) Erfinder: REGENSCHEIT, Norman, 88074 Meckenbeuren (DE)
(86) Internationale Anmeldenummer: PCT/EP2004/006121
(87) Internationale Veröffentlichungsnummer: WO 2005/003592

(56) Entgegenhaltungen:
- DE-A- 3 521 932
- DE-A- 4 416 930
- DE-A- 10 131 329

## Beschreibung

Die vorliegende Erfindung bezieht sich auf ein Lastschaltgetriebe für Baumaschinen, insbesondere für Baggerlader und Telehandler gemäß dem Oberbegriff des Patentanspruchs 1.

Derartige Getriebe sind als üblicherweise als Wendegetriebe ausgeführt und werden in vielen unterschiedlichen Baumaschinen eingesetzt, wobei die Einbaubedingungen in Abhängigkeit vom Fahrzeugtyp unterschiedlich ausfallen können. Beispielsweise kann der zur Verfügung stehende Einbauraum extrem klein ausfallen. Ferner können unterschiedliche Achsabstände zwischen der Getriebeantriebswelle und der Getriebeabtriebswelle auftreten; zudem kann, je nach Fahrzeugtyp, ein bestimmter Achsversatz zwischen der Ein- und Ausgangswelle des Getriebes erforderlich sein.

Ein Baggerladerfahrzeug fordert beispielsweise aufgrund des zentralen Einbaus und der Bodenfreiheit eine kompakte Bauweise. Ein Telehandlerfahrzeug fordert je nach Ausführung eine schlanke, hohe Silhouette mit geringen seitlichen Ausladungen oder eine niedrige Bauweise mit der Möglichkeit der seitlichen Ausdehnung.

Des Weiteren wird in den meisten Einsatzbereichen von Baumaschinen mindestens ein Nebenantrieb benötigt, beispielsweise für die Hydraulik der Arbeitsmaschine. Die Aufgaben, die ein Wendegetriebe zu erfüllen hat, sind demnach bedingt durch die Bauart des Fahrzeugs sehr unterschiedlich. Diese Anforderungen müssen innerhalb der axialen Baulänge und Bereite des Getriebes erfüllt werden.

Getriebe der eingangs genannten Art haben unterschiedliche Anforderungen an die Positionen der Abtriebswellen und an die Anzahl der benötigten Vorwärts- und Rückwärtsgänge.

Beispielsweise haben Baggerladergetriebe Anforderungen an einen kurzen Abstand zwischen Antriebswelle und Abtriebswelle (zu den Hinterrädern), was durch die Position und durch den Einbauraum im Fahrzeug bedingt ist. Des Weiteren soll möglichst viel Bodenfreiheit gewährleistet werden, was bedeutet, dass die Motor/Getriebeeinheit möglichst hoch sitzen sollte. Bei Baggerladern sind in den meisten Fällen die Hinterräder deutlich größer als die Vorderräder, wodurch die vertikale Lage der Hinterachse deutlich höher als die der Vorderachse ist. Typische Abstände, die sich somit ergeben, sind 160 bis 180 mm in vertikaler Richtung ohne seitlichen Versatz oder mit geringem seitlichen Versatz.

Baggerlader weisen üblicherweise einen zuschaltbaren Vorderradabtrieb auf, wobei der Vorderradantrieb aufgrund der kleineren Vorderräder am Getriebe gegenüber dem Abtrieb zu den Hinterrädern tiefer liegt. Da sich auf der vorderen Seite des Getriebes auch die Motoranflanschung befindet, gibt es hier die bauraumbedingte Beschränkung, dass der Vorderradantrieb außerhalb bzw. unterhalb der Wandlerglocke anzuordnen ist.

Telehandler haben dahingegen einen permanenten Vierradantrieb. Die Vorderradantrieb liegt auf der gleichen Position wie der hintere Abtrieb, wodurch das Getriebe nur eine Abtriebswelle benötigt. Bedingt durch den Fahrzeugaufbau haben Telehandlergetriebe andere Anforderungen an den Achsabstand als Baggerladergetriebe. In vielen Fällen ist beispielsweise ein großer seitlicher Versatz des Abtriebes zum Antrieb notwendig. Diese Forderung resultiert aus der seitlichen Einbauposition des Motors. Somit ist ein horizontaler Versatz zu der mittigen Gelenkwelle notwendig. Die Überbrückung des Kraftflusses zur Fahrzeugmitte wurde in den meisten Fällen bisher durch den Einbau eines Achsverteilergetriebes erreicht.

Eine weitere typische Einbauposition ist die der mittigen Anordnung der Getriebe/Motoreinheit bei Telehandlern mit seitlichem Baum möglich. Hier darf es keinen seitlichen Versatz des Abtriebes (bezogen auf den Antrieb) geben; der vertikale Achsabstand ist deutlich größer gegenüber einem Telehandler mit Verteilergetriebe sowie gegenüber einem Baggerladergetriebe.

Aus der EP 0 759 129 B1 der Anmelderin ist ein lastschaltbares Wendegetriebe bekannt, welches durch die Aufteilung von Schaltkupplungen, Festrädern und Losrädern auf mehrere Vorlegewellen einen Antriebsrädersatz und einen Verteilerrädersatz aufweist, womit lange und kurze Achsabstände realisiert werden können. Für lange Achsabstände ist vorgesehen, die Vorgelegewellen im Wesentlichen zwischen der Antriebs- und der Abtriebswelle anzuordnen, wobei je nach gewünschtem Gang unterschiedliche Kombinationen von Vorgelegewellen an der Kraftübertragung beteiligt sind. Bei kurzen Achsabständen werden die Vorgelegewellen im Kreis um die Antriebswelle herum positioniert, wodurch ihre Lage zueinander bereits vorbestimmt ist. Bei diesem Wendegetriebe sind zur Realisierung verschiedener Achsabstände sich voneinander unterschiedliche Wellenanordnungen vorgesehen.

Ferner ist aus der gattungsgeniäßen DE 101 31 329 der Anmelderin ein Lastschaltbares, mehrgängiges Wendegetriebe mit einer Antriebswelle, einer Abtriebswelle und mehreren Vorgelegewellen mit auf diesen verteilten Losrädern, Festrädern und Schaltkupplungen, die mehrere Vorgelegeeinheiten zur Gang- und Richtungsschaltung bilden bekannt. Hierbei sind die einzelnen Wellen zu einer Wendegetriebeeinheit und einer Ganggetriebeeinheit zusammengefasst, wobei die Wendegetriebeeinheit an einer beliebigen Seite der Antriebswelle vorgesehen ist und die Ganggetriebeeinheit an die Wendegetriebeeinheit anschließt, sodass die Wendegetriebeeinheit und die Ganggetriebeeinheit bezogen auf die Antriebswelle hintereinander auf einer Seite der Antriebswelle angeordnet sind.

Bei Getriebekonzepten nach dem Stand der Technik kann der Achsabstand in nachteiliger Weise nicht sehr variabel gestaltet werden. Aufgrund der Kupplungs- und Wellenanordnung und des Kämmens bestimmter Räder miteinander besteht geringer Gestaltungsfreiraum bezüglich der Positionierung und des Achsabstandes (Antrieb zu Abtrieb). Oft ist eine konstruktive Modifikation, um geänderten Anforderungen an den Achsabstand genügen zu können, nur mit hohem Kostenaufwand möglich, was bedeutet, dass zur Realisierung unter-schiedlicher Achsabstände unterschiedliche Getriebekonzepte entwickelt werden müssen.

Beispielsweise ist es bei bestehenden Getriebekonzepten notwendig, eine Zwischenwelle einzuführen, um von einem kurzen vertikalen Achsabstand auf einen großen Achsabstand zu kommen. Um einen großen seitlichen Versatz zu erhalten, muss ein Verteilergetriebe angebaut werden.

Die bestehenden Getriebeschemata weisen den Nachteil auf, dass die äußerliche Getriebeform nur in bedingt flexibel gestaltbar ist. Somit ist es oft nicht möglich, mit einem Getriebekonzept den Anforderungen an den Einbauraum der verschiedenen Fahrzeugtypen zu genügen.

Viele der üblichen Getriebearten weisen zudem nicht die erforderliche Flexibilität bzw. Modularität auf, um den unterschiedlichen Anforderungen der Gangzahlen in einem Getriebekonzept gerecht zu werden. Zur Realisierung dieser unterschiedlichen Gangzahlen sind zumindest oft aufwendige Umkonstruktionen notwendig. Bei manchen Getriebebauweisen ist es zwar möglich, durch "Entnehmen" einer Kupplung aus einem 5- bzw. 6-Gang-Getriebe ein 4-Gang-Getriebe anzubieten; dies resultiert jedoch nicht in einer signifikanten Kostenreduzierung, da das Konzept für z. B. 6-Gang-Getriebe ausgelegt ist.

Der vorliegenden Erfindung liegt die Aufgabe zugrunde, ein Lastschaltgetriebe für Baumaschinen, insbesondere für Baggerlader und Telehandler anzugeben, welches die Nachteile des Standes der Technik vermeidet. Insbesondere sollen sehr kleine und sehr große Achsabstände ermöglicht werden; zudem sollen die möglichen Wellenanordnungen den unterschiedlichsten Anforderungen von Baggerladergetrieben und Telehandlergetrieben genügen.

Diese Aufgabe wird durch die Merkmale des Patentanspruchs 1 gelöst. Weitere Ausgestaltungen und Vorteile gehen aus den Unteransprüchen hervor.

Demnach wird ein lastschaltbares, mehrgängiges Wendegetriebe mit einer Antriebswelle, einer Abtriebswelle und mehreren Vorgelegewellen mit auf diesen verteilten Losrädern, Festrädern und Schältkupplungen, die mehrere Vorgelegeeinheiten zur Gang- und Richtungsschaltung bilden, vorgeschlagen, bei dem die einer Vorwärtsgangeinheit (Richtungseinheit) entsprechende Vorgelegewelle und eine einer weiteren Vorwärtsgangeinheit (Richtungseinheit) entsprechende Vorgelegewelle mit der Antriebswelle kämmen, wobei die Vorgelegewellen, die mit der Antriebswelle kämmen, in jeder gewünschten Winkelposition um die Antriebswelle verdrehbar sind.

Gemäß der Erfindung sind die Gängen entsprechenden Vorgelegewellen, bezogen auf die Antriebswelle, hintereinander auf einer Seite der Antriebswelle angeordnet.

In vorteilhafter Weise können die Gängen entsprechenden Vorgelegewellen jeweils um die nächste räumlich gesehen in Richtung Antriebswelle angeordnete Vorgelegewelle in einem großen Winkelbereich gedreht werden. Somit lässt sich fast jede Gehäuseform realisieren, wodurch das erfindungsgemäße Getriebe den Anforderungen für Baggerladergetriebe und für Telehandlergetriebe genügt. Das erfindungsgemäße Getriebe umfasst vorzugsweise sechs Vorwärts- und drei Rückwärtsgänge.

Die Position des Vorderradantriebs kann gemäß der Erfindung sehr variabel gestaltet werden, da der Vorderradantrieb in einem großen Winkelfenster um den Abtrieb angeordnet werden kann. Für ein Baggerladergetriebe ist der Vorderradantrieb separat zuschaltbar; für ein Telehandlergetriebe ist der Abtrieb nach hinten und nach vorne in einer Welle vereint.

Die Erfindung wird im folgenden anhand der beigefügten Figuren beispielhaft näher erläutert (gleiche Bezugszeichen entsprechen gleichen Bauteilen).
Es stellen dar:
- Fig. 1: ein Getriebeschema einer ersten Ausführungsform eines erfindungsgemäßen Getriebes;
- Fig. 2: ein Getriebeschema einer zweiten Ausführungsform eines erfindungsgemäßen Getriebes;
- Fig. 3: weitere Getriebeschemata eines Getriebes
- bis 7: gemäß der vorliegenden Erfindung;
- Fig. 8: eine Variante der Verbindung der Abtriebswelle mit den zwei benachbarten Vorgelegewellen gemäß der Erfindung und
- Fig. 9: Darstellungen der Wellenanordnung für
- bis 11: unterschiedliche Ausführungsformen eines Getriebes gemäß der vorliegenden Erfindung.

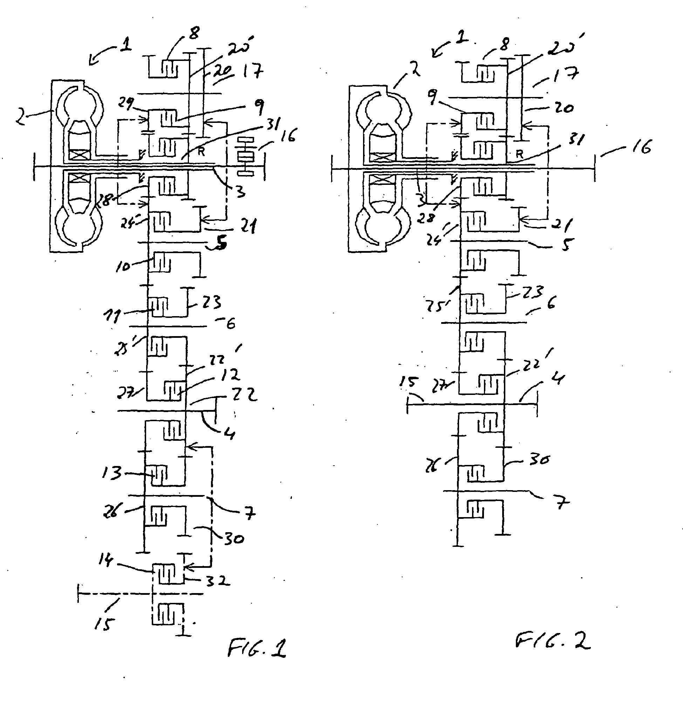

In Fig. 1 wird ein lastschaltbares, mehrgängiges Wendegetriebe 1 gezeigt, das sechs Vorwärts- und drei Rückwärtsgänge aufweist, mit einem Drehmomentwandler 2, einer Antriebswelle 3, einer Abtriebswelle 4 und mehreren Vorgelegewellen 5, 6, 7, 17 mit auf diesen verteilten Losrädern, Festrädern und Schaltkupplungen 8, 9, 10, 11, 12, 13, die mehrere Vorgelegeeinheiten zur Gang- und Richtungsschaltung bilden. Hierbei werden die Schaltkupplungen 8 und 10 als Vorwärtskupplungen eingesetzt; die Rückwärtskupplung ist mit dem Bezugszeichen 9 versehen. Ferner ist bei dem erfindungsgemäßen Getriebe ein separat über die Schaltkupplung 14 zuschaltbarer Vorderradantrieb 15 vorgesehen, welcher mit einem Festrad 22 der Abtriebswelle 4 über ein Losrad 32 verbindbar ist, wodurch diese Ausführungsform insbesondere zum Einbau in Baggerlader geeignet ist.

Wie Fig. 1 zu entnehmen, ist ein Nebenabtrieb, beispielsweise ein PTO 16, vorgesehen, welcher vorzugsweise mit der Antriebswelle 3 verbunden ist.

Die einer Vorwärtsgangeinheit entsprechende Vorgelegewelle 17 und die der weiteren Vorwärtsgangeinheit entsprechende Vorgelegewelle 5 kämmen mit der Antriebswelle 3; beide Vorgelegewellen sind in jeder gewünschten Winkelposition um die Antriebswelle 3 verdrehbar.

Gemäß der Erfindung kann die Welle 6 um die Welle 5 in einem sehr großen Winkelbereich gedreht werden. Zusätzlich kann auch die Abtriebswelle 4 um die Welle 6 in einem großen Winkelbereich gedreht werden; auch die Welle 7 kann in einem großen Winkelbereich um die Abtriebswelle 4 gedreht werden. Durch die erfindungsgemäße Konzeption kann sich die Getriebeform den Bauraumbedingungen und Anforderungen unterschiedlicher Baumaschinentypen anpassen.

Die Antriebswelle 3 kämmt mit den Wellen 17 und 5; zu diesem Zweck ist sie über ein Festrad 31 mit einem Festrad 20' der Welle 17 und über die Schaltkupplung 8 und ein Losrad 28 mit einem Festrad 24' der Welle 5 verbunden. Welle 17 umfasst ein weiteres Festrad 20, welches mit einem Losrad 21 der Welle 5 kämmt. Dieses Losrad 21 kann über die Schaltkupplung 10 mit der Welle 5 verdrehfest verbunden werden. Ferner kämmt das Festrad 24' der Welle 5 mit dem Losrad 29 der Welle 17, welches über die Schaltkupplung 8 mit der Welle 17 verdrehfest verbindbar ist. Das Schließen der Schaltkupplung 9 bewirkt eine Drehrichtungsumkehr der Abtriebswelle und aktiviert die Rückwärtsgänge in Verbindung mit den Schaltkupplungen 11, 12 und 13.

Wie der Figur zu entnehmen, kämmt das Festrad 24' der Welle 5 mit dem Festrad 25' der Welle 6; das Losrad 23 der Welle 6 kämmt mit einem Festrad 22' der Abtriebswelle 4 und ist über die Schaltkupplung 11 verdrehfest mit der Welle 6 verbindbar. Fernere kämmt das Festrad 25' der Welle 6 mit einem Losrad 27' der Abtriebswelle 4, welches über die Schaltkupplung 12 mit der Abtriebswelle verdrehfest verbindbar ist und mit dem Festrad 26 der Welle 7 kämmt. Zudem kämmt das Losrad 30 der Welle 7 mit dem Festrad 22' der Abtriebswelle 4, welches mit einem Losrad 32 des Vorderradantriebes 15 zusätzlich kämmt.

In Fig. 2 ist eine Variante der Ausführungsform gemäß Fig. 1 gezeigt, welche einen permanenten Vorderradantrieb aufweist und insbesondere für Telehandler geeignet ist. Hierbei erfolgt Vorderrad- und Hinterradantrieb auf einer Welle, nämlich der Abtriebswelle 4.

Die Kupplungskombinationen zur Darstellung der 6 Vorwärts- und 3 Rückwärtsgänge der in Fig. 1 und 2 gezeigten Getriebe sind wie folgt:

| Vorwärts | | |
|---|---|---|
| 1. Gang | Schaltkupplungen | 8 und 11 |
| 2. Gang | Schaltkupplungen | 8 und 12 |
| 3. Gang | Schaltkupplungen | 8 und 13 |
| 4. Gang | Schaltkupplungen | 10 und 11 |
| 5. Gang | Schaltkupplungen | 10 und 12 |
| 6. Gang | Schaltkupplungen | 10 und 13 |

| Rückwärts | | |
|---|---|---|
| 7. Gang | Schaltkupplungen | 9 und 11 |
| 8. Gang | Schaltkupplungen | 9 und 12 |
| 9. Gang | Schaltkupplungen | 9 und 13 |

Zur Realisierung von nur fünf oder vier Vorwärtsgängen (jedoch drei Rückwärtsgängen) kann eine bzw. zwei der sechs Vorwärts-Kupplungskombinationen deaktiviert werden.

Das Grundprinzip des gezeigten Getriebeschemas weist zehn Räder auf. Durch Hinzufügen von einem oder mehreren Rädern kann ein sehr weites Spektrum an Übersetzungen und Spreizungen erreicht werden.

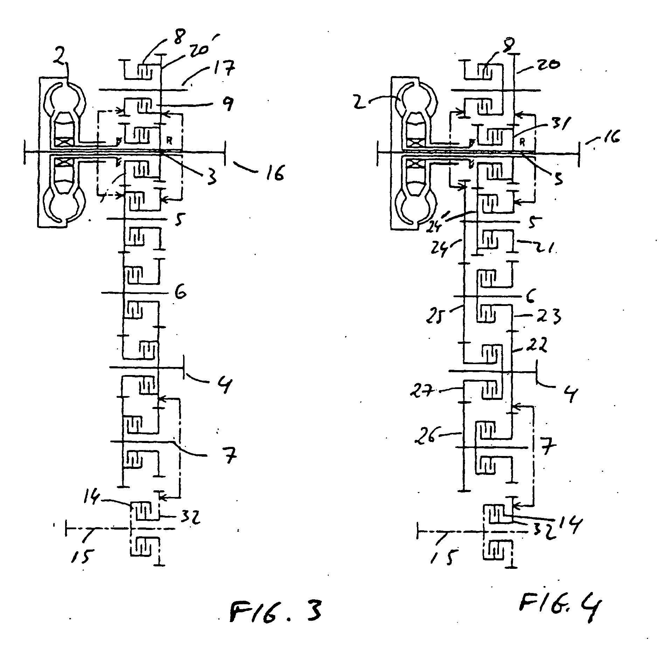

In den Fig. 3, 4, 5, 6 und 7 sind weitere Ausführungsformen mit zuschaltbarem Vorderradantrieb 15 dargestellt, welche sich von den bereits erläuterten Ausführungsbeispielen durch die Anzahl der Räder unterscheiden. Es ist auch möglich einen permanenten Vorderradantrieb vorzusehen, analog dem in Fig. 2 gezeigten Beispiel.

Das Ausführungsbeispiel gemäß Fig. 3 vom Ausführungsbeispiel gemäß Fig. 1 dadurch, dass auf der Welle 17 lediglich ein Festrad 20 angeordnet ist, so dass das der Schaltkupplung 10 zugeordnete Losrad 21 der Welle 5 mit diesem kämmt (durch das zusätzliche Festrad gemäß Fig. 1 wird eine andere Übersetzung erzielt); in Fig. 4 weist die Abtriebswelle 4 ein Festrad 22 auf, welches mit dem Losrad 23 der Welle 6 verbunden ist und nicht mehr mit der Schaltkupplung 12 gekoppelt ist; ebenfalls weisen die Wellen 5 und 6 von den Schaltkupplungen 10 bzw. 11 unabhängige Festräder 24, 25 auf (Welle 5 umfasst hierbei zwei Festräder 24, 24'). Zudem ist auf der Welle 7 das Festrad 26, unabhängig von der Schaltkupplung 13 ausgebildet und mit dem Losrad 27 der Abtriebswelle 4 verbunden.

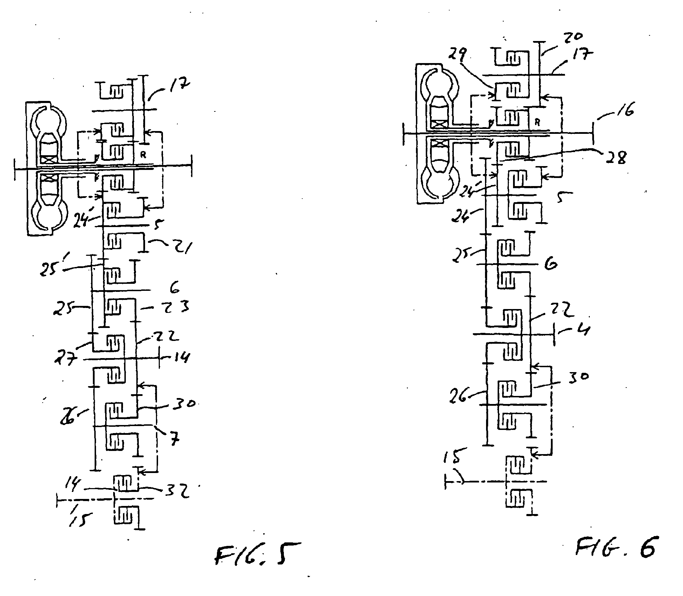

Beim Ausführungsbeispiel nach Fig. 5 sind auf der Welle 6 zwei Festräder 25, 25' vorgesehen, wobei das Festrad 25 mit der Welle 4 (Losrad 27) und das Festrad 25' mit der Welle 5 (Festrad 24') verbunden ist.

Das in Fig. 6 gezeigte Beispiel unterscheidet sich vom Ausführungsbeispiel nach Fig. 1 dadurch, dass die Welle 5 zwei Festräder 24, 24' umfasst, wobei das Festrad 24 mit dem Festrad 25 der Welle 6 und das Festrad 24' mit dem Losrad 29 der Welle 17 und dem Losrad 28 der Welle 3 verbunden ist. Ferner sind das Festrad 25 der Welle 6 nicht mit der Schaltkupplung 11, das Festrad 22 der Welle 4 nicht mit der Schaltkupplung 12 und das Festrad 26 der Welle 7 nicht mit der Schaltkupplung 13 gekoppelt.

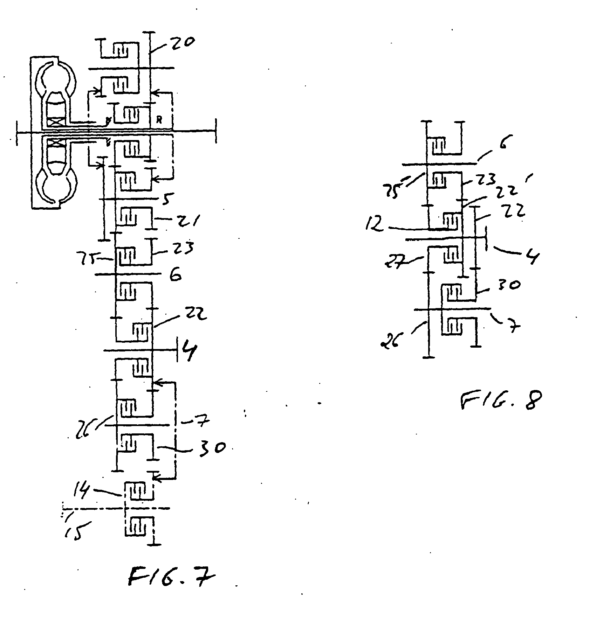

Das Beispiel gemäß Fig. 7 unterscheidet sich vom Ausführungsbeispiel nach Fig. 4 dadurch, dass bei den Wellen 6 und 4 die Festräder 25 bzw. 22 mit den Schaltkupplungen 11 bzw. 12 verbunden sind; ebenfalls ist das Festrad 26 der Welle 7 mit der Schaltkupplung 13 verbunden.

In Fig. 8 ist eine weitere Variante der Verbindung der Abtriebswelle 4 mit den Wellen 6 und 7 dargestellt, bei der die Welle 4 zwei Festräder 22, 22' aufweist, wobei das Festrad 22 mit dem Losrad 30 der Welle 7 und das Festrad 22' mit dem Losrad 23 der Welle 6 verbunden ist. Ferner ist das Losrad 27 der Welle 4 mit dem Festrad 26 der Welle 7 und dem Festrad 25' der Welle 6 über die Schaltkupplung 12 verbindbar.

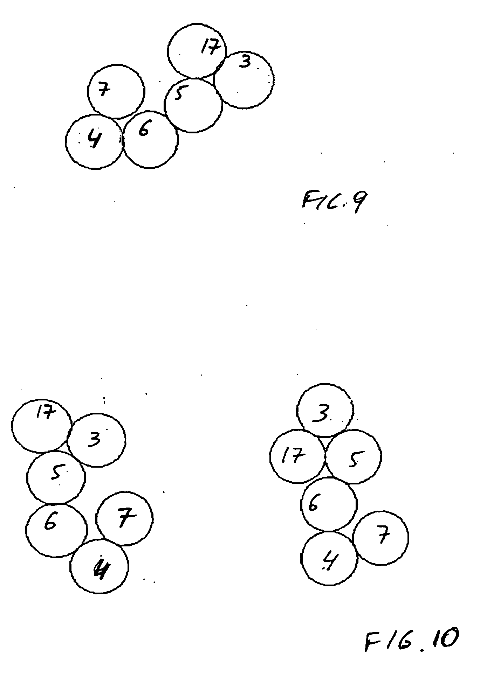

Fig. 9 illustriert eine Möglichkeit der Positionierung der Wellen bei einem seitlichen Einbau bei einem Telehandler. Wie bereits erläutert, kann die Welle 7 um die Abtriebswelle 4 gedreht werden ebenso wie die Wellen 17 und 5 um die Antriebswelle 3.

In Fig. 10 sind zwei Möglichkeiten eines mittigen Einbaus bei einem Telehandler gezeigt. Auch hier kann die Welle 7 um die Abtriebswelle 4 gedreht werden ebenso wie die Wellen 17 und 5 um die Antriebswelle 3.

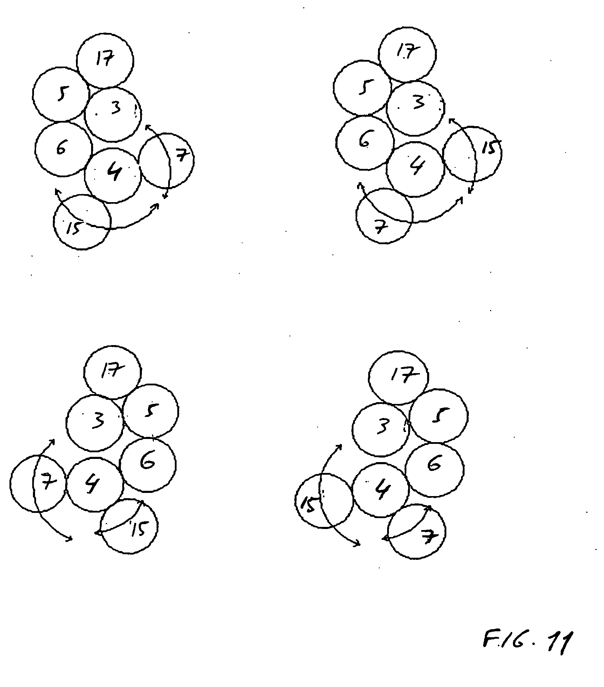

Fig. 11 zeigt vier Varianten der Wellenanordnung bei einem Baggerlader mit zuschaltbarem Vorderradantrieb 15. Hierbei wird deutlich, dass die Wellen 15 (Vorderradantrieb) und 7 um den Abtrieb 4 gedreht werden können; die Wellen 17 und 5 sind um die Antriebswelle 3 drehbar, so dass eine sehr hohe Einbauflexibilität gewährleistet ist.

Im Rahmen weiterer nicht dargestellter Ausführungsformen besteht die Möglichkeit, durch Entnehmen einer kompletten Welle ein Getriebe mit vier Vorwärts- und zwei Rückwärtsgängen zu schaffen.

Es besteht auch die Möglichkeit, dass die Vorderradantriebswelle 15 über ein nicht gezeigtes Festrad mit dem Losrad 23 auf der Vorgelegewelle 6 angeordnet ist.

### Bezugszeichen

- 1: Getriebe
- 2: Wandler
- 3: Antriebswelle
- 4: Abtriebswelle
- 5: Vorgelegewelle
- 6: Vorgelegewelle
- 7: Vorgelegewelle
- 8: Schaltkupplung
- 9: Schaltkupplung
- 10: Schaltkupplung
- 11: Schaltkupplung
- 12: Schaltkupplung
- 13: Schaltkupplung
- 14: Schaltkupplung
- 15: Vorderradantriebswelle
- 16: PTO
- 17: Vorgelegewelle
- 20: Festrad
- 20': Festrad
- 21: Losrad
- 22: Festrad
- 22': Festrad
- 23: Losrad
- 24: Festrad
- 24': Festrad
- 25: Festrad
- 25': Festrad
- 26: Festrad
- 26': Festrad
- 27: Festrad
- 27': Festrad
- 28: Losrad
- 29: Losrad
- 30: Losrad
- 31: Festrad
- 32: Losrad

## Patentansprüche

1. Mehrgängiges Lastschaltgetriebe für Baumaschinen, insbesondere für Baggerlader und Telehandler, mit einem Drehmomentwandler (2), einer Antriebswelle (3), einer Abtriebswelle (4) und mehreren voneinander beabstandeten Vorgelegewellen (5, 6, 17), mit auf den Wellen verteilten Losrädern, Festrädern und Schaltkupplungen (8, 9, 10, 11, 12), die mehrere Vorgelegeeinheiten zur Gang- und Richtungsschaltung bilden, umfassend sechs Vorwärts- und drei Rückwärtsgänge, wobei die Abtriebswelle (4) auch als Vorgelegewelle für einen Gang eingesetzt wird, wobei die Räder einer Vorwärtsgangeinheit entsprechenden Vorgelegewelle (17) und die Räder einer weiteren Vorwärtsgangeinheit entsprechenden Vorgelegewelle (5) mit den Rädern der Antriebswelle (3) kämmen, wobei diese beiden Vorgelegewellen (17, 5) in jeder gewünschten Winkelposition um die Antriebswelle (3) verdrehbar sind, **dadurch gekennzeichnet, dass** weitere den Gängen entsprechende Vorgelegewellen (4, 6), bezogen auf die Antriebswelle (3), hintereinander auf einer Seite der Antriebswelle (3) angeordnet sind und dass die weiteren den Gängen entsprechenden Vorgelegewellen (4, 6) jeweils um die nächste räumlich gesehen in Richtung Antriebswelle (3) angeordnete Vorgelegewelle in einem großen Winkelbereich verdrehbar sind, wobei die weiteren den Gängen entsprechenden Vorgelegewellen (4, 6), um die Welle des im Kraftfluss vorgeschalteten Rades drehbar sind.

2. Mehrgängiges Lastschaltgetriebe für Baumaschinen nach Anspruch 1, **dadurch gekennzeichnet, dass** ein zuschaltbarer Vorderradantrieb (15) vorgesehen ist, welcher mit einem Festrad (22) der Abtriebswelle (4) über ein Losrad (32) verbindbar ist und in einem großen Winkelbereich um die Abtriebswelle (4) anordbar ist.

3. Mehrgängiges Lastschaltgetriebe für Baumaschinen nach Anspruch 1, **dadurch gekennzeichnet, dass** ein permanenter Vorderradantrieb (15) vorgesehen ist, wobei Vorderrad- und Hinterradantrieb über die Abtriebswelle (4) erfolgt.

4. Mehrgängiges Lastschaltgetriebe für Baumaschinen nach einem der vorangehenden Ansprüche, **dadurch gekennzeichnet, dass** durch Hinzufügen von einem oder mehreren Rädern ein sehr weites Spektrum an Übersetzungen und Spreizungen erzielbar ist.

5. Mehrgängiges Lastschaltgetriebe für Baumaschinen nach einem der vorangehenden Ansprüche, **dadurch gekennzeichnet, dass** durch Entnehmen einer kompletten Welle ein Getriebe mit vier Vorwärts- und zwei Rückwärtsgängen entsteht.

6. Mehrgängiges Lastschaltgetriebe für Baumaschinen nach Anspruch 1, **dadurch gekennzeichnet, dass** ein zuschaltbarer Vorderradantrieb (15) vorgesehen ist, welcher mit einem Festrad über ein Losrad (23) verbindbar ist, wobei das Losrad (23) auf einer Vorgelegewelle (6) angeordnet ist.

## Claims

1. Multiple-gear powershift transmission for construction machinery, especially for backhoes (excavator-loaders) and telehandlers, witch a torque converter (2), a drive shaft (3), an output shaft (4) and several spaced countershafts (5, 6, 17), with idlers, fixed gears and shift clutches (8, 9, 10, 11, 12) arranged on the shafts, which constitute several countershaft units for gear and direction selection, comprising six forward and three rearward gears, with the output shaft (4) also being used as countershaft for a gear, with the gears of a countershaft (17) corresponding to a forward-gear unit and the gears of a countershaft (5) corresponding to another forward-gear unit meshing with the gears of the drive shaft (3), with these two countershafts (17, 5) being rotatable in any desired angular position around the drive shaft (3), **characterized in that** further countershafts (4, 6) corresponding to the gears are arranged - relative to the drive shaft (3) - one behind the other on one side of the drive shaft (3), and that each of said further countershafts (4, 6) corresponding to the gears is rotatable by a wide angular range around the next countershaft that is spatially arranged towards the drive shaft (3), with each of said further countershafts (4, 6) corresponding to the gears being rotatable around the shaft of the gear preceding in the power flow.

2. Multiple-gear powershift transmission for construction machinery according to claim 1, **characterized in that** a disengageable front-wheel drive (15) is provided which can be connected to a fixed gear (22) of the output shaft (4) via an idler (32) and is arrangeable around the output shaft (4) in a wide angular range.

3. Multiple-gear powershift transmission for construction machinery according to claim 1, **characterized in that** a permanent front-wheel drive (15) is provided, with front-wheel and rear-wheel drive taking place via the output shaft (4).

4. Multiple-gear powershift transmission for construction machinery according to one of the preceding claims, **characterized in that** a very wide range of ratios and spreading can be achieved through addition of one or several gears.

5. Multiple-gear powershift transmission for construction machinery according to one of the preceding claims, **characterized in that** a transmission with four forward and two rearward gears can be realized through removal of a complete shaft.

6. Multiple-gear powershift transmission for construction machinery according to claim 1, **characterized in that** a disengageable front-wheel drive (15) is provided which can be connected to a fixed gear via an idler (23), with the idler (23) being arranged on a countershaft (6).

## Revendications

1. Boîte de vitesses couplable sous charge à plusieurs rapports pour engins de travaux publics, en particulier pour pelles chargeuses et chariots élévateurs, dotée d'un convertisseur de couple (2), d'un arbre d'entrée (3), d'un arbre de sortie (4) et de plusieurs arbres intermédiaires (5, 6, 17) disposés à distance l'un par rapport à l'autre, de pignons fous répartis sur les arbres, de pignons fixes et d'embrayages (8, 9, 100, 11, 12) formant plusieurs ensembles d'arbres intermédiaires pour le changement de vitesse et l'inversion du sens de marche, comprenant six rapports de marche avant et trois rapports de marche arrière, sachant que l'arbre de sortie (4) est utilisé aussi comme arbre intermédiaire pour un rapport, sachant que les pignons d'un arbre intermédiaire (17) correspondant à une unité de rapports de marche avant et les pignons d'un arbre intermédiaire (5) correspondant à une unité de rapports de marche avant engrènent avec les pignons de l'arbre d'entrée (3), sachant que ces deux arbres intermédiaires (17, 5) peuvent être tournés dans chaque position angulaire souhaitée autour de l'arbre d'entrée (3), **caractérisée en ce que** d'autres arbres intermédiaires (4, 6) correspondants aux rapports sont disposés - par rapport à l'arbre d'entrée (3) - l'un derrière l'autre et sur un côté de l'arbre d'entrée (3) et **en ce que** les autres arbres intermédiaires (4, 6) correspondants aux rapports peuvent être tournés respectivement autour de l'arbre intermédiaire successif disposé - vu dans l'espace en sens de l'arbre d'entrée (3) - dans une grande plage d'angles, sachant que les autres arbres intermédiaires (4, 6) correspondants aux rapports peuvent être tournés, lors de la transmission du couple, autour de l'arbre du pignon monté en amont

2. Boîte de vitesses couplable sous charge à plusieurs rapports pour engins de travaux publics selon la revendication 1, **caractérisée en ce que** est prévue une unité de traction avant (15) couplable, celle-ci pouvant être connectée par l'intermédiaire d'un pignon fou (32) à un pignon fixe (22) de l'arbre de sortie (4) et pouvant être disposée dans une grande plage d'angles autour de l'arbre de sortie (4).

3. Boîte de vitesses couplable sous charge à plusieurs rapports pour engins de travaux publics selon la revendication 1, **caractérisée en ce que** est prévue une unité de traction avant permanente (15), sachant que l'entraînement des roues avant et des roues arrière s'effectue par l'intermédiaire de l'arbre de sortie (4).

4. Boîte de vitesses couplable sous charge à plusieurs rapports pour engins de travaux publics selon une des revendications précédentes, **caractérisée en ce que** par le rajout d'un ou de plusieurs pignons il est possible de réaliser une plage très importante de rapports de démultiplication et d'ouvertures.

5. Boîte de vitesses couplable sous charge à plusieurs rapports pour engins de travaux publics selon une des revendications précédentes, **caractérisée en ce que** par l'élimination d'un arbre complet il est possible de réaliser une boîte de vitesses comportant quattre rapports de marche avant et deux rapports de marche arrière.

6. Boîte de vitesses couplable sous charge à plusieurs rapports pour engins de travaux publics selon la revendication 1, **caractérisée en ce que** est prévue une unité de traction avant (15) couplable, celle-ci pouvant être connectée par l'intermédiaire d'un pignon fou (23) à un pignon fixe, sachant que le pignon fou (23) est disposé sur un arbre intermédiaire (6).
